# EUROPÄISCHE PATENTANMELDUNG

(11) **EP 1 992 594 A1**
(43) Veröffentlichungstag der Anmeldung: **19.11.2008**
(21) Anmeldenummer: 07107792.9
(22) Anmeldetag: 09.05.2007
(51) Int. Cl.: C03C 17/06, C03C 23/00, C03B 33/02, B41M 5/00, B65C 1/02

(54) **Verfahren zur Kennzeichnung von Glasplatten**

(71) Anmelder: Albat + Wirsam Software AG, 35440 Linden (DE)
(72) Erfinder: Schmidt, Thomas H., 35440, Linden (DE)
(74) Vertreter: Betten & Resch

(57) **Zusammenfassung**

Ein Verfahren zum Kennzeichnung von Glasplatten umfasst die Schritte Erfassung einer Rohglasplatte (20) vor einem Zuschnitt, virtuelle Aufteilung der Rohglasplatte (20) in eine Mehrzahl von Unterteilungen (25), und Aufbringen einer Markierung (28) auf jede der Unterteilungen (25) der Rohglasplatte (20), welche Markierung (28) eine Bezeichnung der Rohglasplatte (20) und eine Bezeichnung der Unterteilung (25) umfasst. Vorzugsweise sind die Markierungen dabei permanent. Durch die Erfindung wird eine dauerhafte und preisgünstige eindeutige Markierung beliebig zuschneidbarer Glasplatten ermöglicht.

## Beschreibung

### Gebiet der Erfindung

Die Erfindung betrifft ein Verfahren zur Kennzeichnung von Glasplatten und entsprechend gekennzeichnete Glasplatten.

### Technoloqischer Hintergrund

In flachglasverarbeitenden Betrieben wird vielfach eine Betriebsdatenerfassung eingesetzt, um Gläser während der Produktion, bei der Lieferung an den Kunden und nach dem Einbau zu kennzeichnen. Dabei werden gedruckte Etiketten mit einem Barcode verwendet, die auf die Gläser aufgeklebt werden und automatisiert mittels Barcode-Scanner gelesen werden können.

Dieses Verfahren ist aufwändig, fehleranfällig und teuer.

Aus der DE 10 2005 026 038 A1 ist ein Verfahren zur Markierung von Objektoberflächen, insbesondere Glasoberflächen bekannt, bei dem in Kontakt oder in einem Abstand zur Glasoberfläche eine Trägerfolie angeordnet wird, welche auf seiner zur Glasoberfläche weisenden Seite wenigstens eine in andere Schichten eingebettete Metallschicht trägt, ein Laserstrahl auf das Schichtsystem gerichtet wird und aufgrund der Laserstrahleinstrahlung Material aus dem Schichtsystem auf die zu markierende Objektoberfläche übertragen wird und dort als Matrix mit metallischen Nanopartikeln haftet, wobei die Matrix aus den ursprünglich in den Schichten des Schichtsystems vorliegenden Substanzen gebildet ist.

### Zusammenfassung der Erfindung

Der vorliegenden Erfindung liegt somit die Aufgabe zugrunde, ein Verfahren zur Kennzeichnung von Glasplatten vorzuschlagen, welches eine zuverlässige Identifizierung von Glasplatten ermöglicht und dabei kostengünstig, optisch unauffällig und leicht handhabbar ist.

Gelöst wird die Aufgabe durch ein Verfahren zur Kennzeichnung von Glasscheiben, umfassend Erfassung einer Rohglasplatte vor einem Zuschnitt, die virtuelle Aufteilung der Rohglasplatte in eine Mehrzahl von Unterteilungen, und das Aufbringen einer Markierung auf jede der Unterteilungen der Rohglasplatte, welche Markierung eine Bezeichnung der Rohglasplatte und eine Bezeichnung der Unterteilung umfasst.

Das erfindungsgemäße Verfahren ermöglicht so die Kennzeichnung einer Rohglasplatte schon im Floatwerk vor dem Zerschneiden. Die Kennzeichnung einer Mehrzahl von Unterteilungen ermöglicht später die eindeutige Identifizierung (ab einer bestimmten Mindestgröße) beliebig zugeschnittener Glaszuschnitte aufgrund der Kennzeichnung der Gesamtplatte in Verbindung mit der/den Kennzeichnungen der Unterteilung/en.

Die Erfindung schlägt außerdem eine entsprechende Glasplatte mit einer Mehrzahl von Markierungen vor, die jeweils eine Bezeichnung der Glasplatte und eine Bezeichnung einer Unterteilung der Glasplatte umfasst.

Vorzugsweise sind die Unterteilungen als rechteckförmige Matrix angeordnet. Durch ein derartiges Raster lässt sich eine rechteckige Rohglasplatte besonders vorteilhaft aufteilen, wobei die Markierung auch eine Aussage über die Position einer jeweiligen Unterteilung zulässt.

Vorzugsweise sind die Markierungen permanente, nicht-entfernbare Markierungen.

Vorzugsweise werden die Rohglasplatten und die Unterteilungen jeweils mit einer laufenden Nummer gekennzeichnet.

Gemäß einem bevorzugten Ausführungsbeispiel sind die Markierungen bei üblicher Verwendung der Glasplatte bzw. des später eingesetzten Zuschnitts nicht sichtbar. Dabei werden die Markierungen vorzugsweise im Glasinnern unterhalb der Glasoberfläche angebracht, beispielsweise mittels Laserstrahl auf einer Trägerfolie. Die Markierung stört so einerseits nicht, lässt sich andererseits jedoch auch nicht unbefugt oder unbeabsichtigt entfernen.

### Kurze Beschreibung der Zeichnungen

Die Erfindung wird im folgenden anhand eines Ausführungsbeispiels unter Bezugnahme auf die Zeichnungen im Detail beschrieben.
Fig. 1 zeigt schematisch ein Ausführungsbeispiel einer erfindungsgemäßen Glasplatte mit einer Mehrzahl von Markierungen.
Fig. 2 zeigt schematisch einen aus der in Figur 1 gezeigten markierten Rohglasplatte hergestellten Glaszuschnitt.
Fig. 3 ist ein Flussdiagramm, das schematisch die Verfahrensschritte eines Ausführungsbeispiels des erfindungsgemäßen Verfahrens zum Kennzeichnung von Glasscheiben zeigt.

### Detaillierte Beschreibung der Erfindung

Zur eindeutigen und permanenten Kennzeichnung der Glasplatten kann eine Markierung dienen, die erfindungsgemäß schon während der Herstellung der Rohglastafeln im Floatwerk aufgebracht wird. Dabei wird jede Glastafel mit einem Raster von (bei üblichem Gebrauch unsichtbaren) Markierungen versehen Die Markierungen kennzeichnen jeweils sowohl die individuelle Glastafel als auch den Rasterpunkt. Beim Zuschnitt der Kundenmaße aus den Glastafeln werden den zugeschnittenen Scheiben die jeweiligen Markierungen (im EDV System) zugeordnet und dadurch eindeutig gekennzeichnet. Wenn die Identität einer zugeschnittenen Scheibe festgestellt werden soll, genügt das Lesen einer der auf der Scheibe vorhandenen Markierungen. Damit kann die Identität der Scheibe sogar noch nach einem Bruch festgestellt werden.

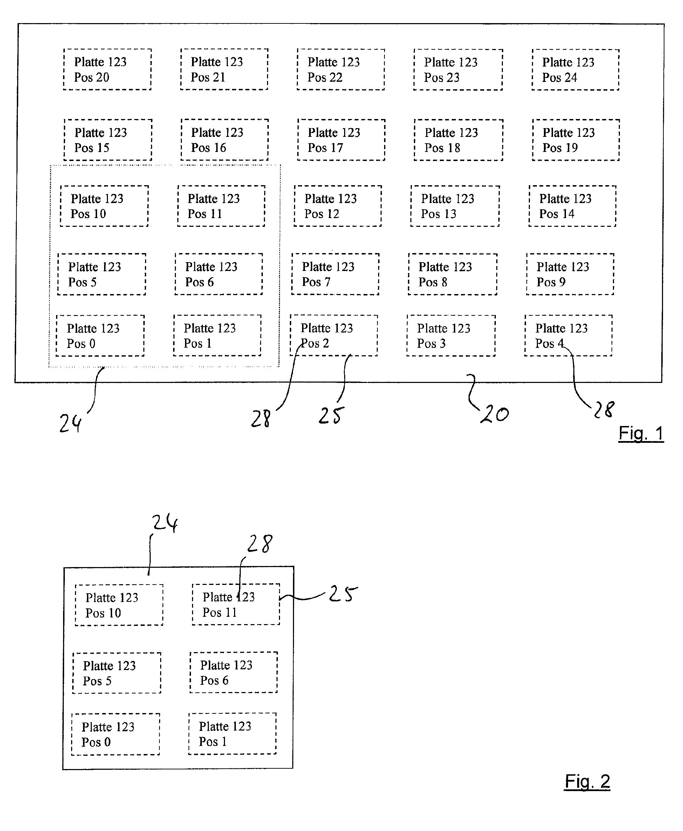

Figur 1 zeigt schematisch ein Ausführungsbeispiel einer Rohglasplatte mit einer Mehrzahl von Markierungen 28 gemäß der vorliegenden Erfindung. Die Rohglasplatte 20 wird vor einem Zuschneidevorgang beispielsweise bereits im Floatwerk von einem Rechner in eine Vielzahl von virtuellen Unterteilungen 25 aufgeteilt. Virtuell bedeutet in diesem Zusammenhang, dass die Scheibe 20 nicht tatsächlich in die Unterteilungen 25 aufgeteilt wird, sondern letztere der Positionierung der Markierungen 28 dienen.

In dem in Figur 1 gezeigten Ausführungsbeispiel ist die Glasplatte 20 insgesamt durch die Markierung "123" gekennzeichnet und die einzelnen Unterteilungen 25 von links unten nach rechts oben aufsteigend durch laufende Nummern von ,,Pos 0" bis ,,Pos 24". Jede andere Systematik der Nummerierung ist erfindungsgemäß jedoch ebenso möglich.

In Figur 1 ist mit punktierter Linie bereits ein späterer Glaszuschnitt 24 angedeutet, der in Figur 2 dargestellt ist. Dieser Glaszuschnitt 24 ist eindeutig gekennzeichnet durch insgesamt sechs Markierungen. Es ist ersichtlich, dass ab einer bestimmten Mindestgröße jeder Glaszuschnitt zumindest durch eine eindeutige Kennzeichnung identifizierbar ist.

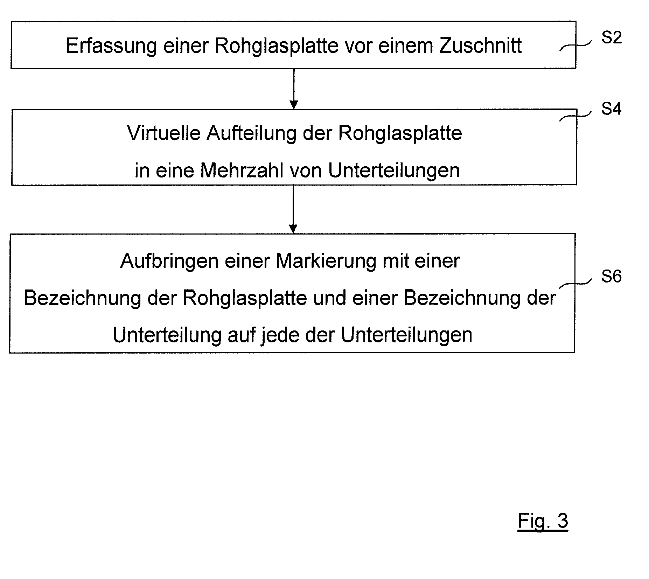

Das Flussdiagramm in Figur 3 zeigt schematisch die Verfahrensschritte eines Ausführungsbeispiels des erfindungsgemäßen Verfahrens zum Kennzeichnung von Glasscheiben.

Im Verfahrensschritt S2 wird eine Rohglasplatte vor dem Zuschnitt erfasst. Im anschließenden Verfahrensschritt S4 wird die erfasste Rohglasplatte dann virtuell in eine Anzahl von Unterteilungen oder Rastern aufgeteilt. Jede Unterteilung wird anschließend im Verfahrensschritt S6 mit einer Markierung versehen, die eine Bezeichnung der Rohglasplatte sowie eine Bezeichnung der Unterteilung umfasst.

Erfindungsgemäß werden die Markierungen vorzugsweise unterhalb der Glasoberfläche angebracht, beispielsweise mittels Laserstrahl auf einer Trägerfolie entsprechend dem oben genannten, in der DE 10 2005 026 038 A1 beschriebenen Verfahren, bei dem die Kennzeichnung unzerstörbar nanotechnisch im Inneren des Glases unterhalb der Oberfläche angebracht wird. Die Markierung bleibt so bei normalem Gebrauch unsichtbar, aber auch permanent, auch im Falle von Glasbruch.

Im Rahmen der Erfindung können Floatglas-Hersteller Glastafeln mit unterschiedlich dichten Rastern anbieten, etwa wenn eine spärliche Rasterung billiger ist. Beim späteren Zuschnitt ist dann darauf zu achten, dass für das gegebene Schnittmuster ein Lagermaß mit geeignetem Raster gewählt wird, so dass auf jeder Scheibe noch mindestens eine Markierung liegt.

Das erfindungsgemäße Verfahren weist die folgenden Vorteile auf:
- Das Erzeugen, Anbringen, Ablösen (evtl. erneut Anbringen nach dem Waschen etc.) von herkömmlichen Markierungen entfällt. Und damit auch die Notwendigkeit für Drucker, Toner, Etikettenformulare etc.
- Die Markierung ist permanent und kann nicht dauerhaft verschmutzen oder verloren gehen.
- Die Markierung kann mittels eines Kamerasystems in einem Durchgangsportal gelesen werden. Dadurch sind keine separaten Lesevorgänge mittels Handscanner etc. mehr notwendig und es ist trotzdem eine 100%ige Erfassungsquote erreichbar.
- Die Markierung ist auch nach dem Einbau permanent verfügbar, selbst nach einem Glasbruch.

## Patentansprüche

1. Verfahren zum Kennzeichnung von Glasplatten, umfassend die Schritte:
- Erfassung einer Rohglasplatte (20) vor einem Zuschnitt,
- virtuelle Aufteilung der Rohglasplatte (20) in eine Mehrzahl von Unterteilungen (25), und
- Aufbringen einer Markierung (28) auf jede der Unterteilungen (25) der Rohglasplatte (20), welche Markierung (28) eine Bezeichnung der Rohglasplatte (20) und eine Bezeichnung der Unterteilung (25) umfasst.

2. Verfahren nach Anspruch 1, wobei die Unterteilungen (25) als rechteckförmige Matrix angeordnet sind.

3. Verfahren nach Anspruch 1 oder 2, wobei die Rohglasplatten (20) und die Unterteilungen (25) jeweils mit einer laufenden Nummer **gekennzeichnet** werden.

4. Verfahren nach einem der Ansprüche 1 bis 3, wobei die Markierungen (28) permanent sind.

5. Verfahren nach einem der Ansprüche 1 bis 4, wobei die Markierungen (28) für einen Betrachter bei üblichem Gebrauch unsichtbar sind.

6. Verfahren nach einem der Ansprüche 1 bis 5, wobei die Markierungen (28) im Glasinnern unterhalb der Glasoberfläche angebracht werden.

7. Verfahren nach einem der Ansprüche 1 bis 6, wobei die Markierungen (28) mittels Laserstrahl auf einer Trägerfolie (22) angebracht werden.

8. Glasplatte mit einer Mehrzahl von Markierungen (28), die jeweils eine Bezeichnung der Glasplatte (20) und eine Bezeichnung einer Unterteilung (25) der Glasplatte (20) umfasst.

9. Glasplatte nach Anspruch 8, wobei die Unterteilungen (25) als rechteckförmige Matrix angeordnet sind.

10. Glasplatte nach Anspruch 8 oder 9, wobei die Glasplatten (20) und die Unterteilungen (25) jeweils mit einer laufenden Nummer **gekennzeichnet** sind.

11. Glasplatte nach einem der Ansprüche 8 bis 10, wobei die Markierungen (28) permanent sind.

12. Glasplatte nach einem der Ansprüche 8 bis 11, wobei die Markierungen (28) für einen Betrachter bei üblichem Gebrauch unsichtbar sind.

13. Glasplatte nach einem der Ansprüche 8 bis 12, wobei die Markierungen (28) im Glasinnern unterhalb der Glasoberfläche angebracht sind.

14. Glasplatte nach einem der Ansprüche 8 bis 13, wobei die Markierungen (28) mittels Laserstrahl auf einer Trägerfolie (22) angebracht sind.
